# EUROPEAN PATENT SPECIFICATION

(11) **EP 3 793 927 B1**
(45) Date of publication and mention of the grant of the patent: **19.07.2023**
(21) Application number: 19726903.8
(22) Date of filing: 15.05.2019
(51) Int. Cl.: B66C 13/06, B66C 1/10, F03D 13/10

(54) **WIND TURBINE ELEMENT LIFTING METHOD AND APPARATUS**
VERFAHREN UND VORRICHTUNG ZUM HEBEN VON WINDTURBINENELEMENTEN
PROCÉDÉ ET APPAREIL DE LEVAGE D'ÉLÉMENT DE TURBINE ÉOLIENNE

(30) Priority: 17.05.2018 GB 201808061; 22.11.2018 DK PA201870773
(43) Date of publication of application: 24.03.2021
(73) Proprietor: VESTAS WIND SYSTEMS A/S, 8200 Aarhus N (DK)
(72) Inventor: PEDERSEN, Gunnar K. Storgaard, 6900 Skjern (DK); FREDERIKSEN, Christian Skov, 6920 Videbæk (DK); J.B.K. JENSEN, Ivar, 8543 Hornslet (DK); BAUN, Torben Ladegaard, 8541 Skødstrup (DK); VOIGT, Niels Vinther, 8200 Aarhus N (DK)
(74) Representative: Vestas Patents Department
(86) International application number: PCT/DK2019/050161
(87) International publication number: WO 2019/219151

(56) References cited:
- EP-A1- 2 886 503
- CN-A- 107 285 198
- JP-A- H10 305 989
- JP-A- 2016 210 607

## Description

This invention relates to a lifting method and apparatus for an element of a wind turbine. In particular, the invention relates to lifting a wind turbine element safely when constructing or disassembling or servicing a wind turbine, and to methods and apparatus for doing the same.

A horizontal axis wind-turbine typically comprises a nacelle atop a tower and a blade rotor attached to the nacelle. More specifically, the rotor typically comprises a set of blades radially connected to a hub. The hub is mounted on a rotatable driveshaft housed in the nacelle. The driveshaft forms part of a drivetrain which includes a generator and which may include a gearbox. The driveshaft and other drivetrain elements are usually housed in the nacelle. One or more transformers and/or power management systems may also be housed in the nacelle. The driveshaft may be directly coupled to a generator, or indirectly coupled, e.g. via a gearbox. The generator is typically associated with power management components including a transformer and inverter and/or converter systems. The rotor rotates as the wind applies lift force to the blades. This rotates the driveshaft, which in turn drives the generator. The generator sends electrical energy to the power management systems including transformers and switchgear equipment. The electrical power may then be delivered to the grid or other power network.

When constructing a wind turbine, it is usual practice to first build a tower, usually from one or more segments, fixed on a foundation or transition piece or other base. A nacelle may then be placed atop the tower. The nacelle may be put in position on the tower in a partially or fully preassembled state. That is to say, the nacelle may comprise some or all the drivetrain and/or power management elements when it is mounted on the tower. In some cases, also a hub may be preinstalled at a nacelle, before installation of the nacelle on the tower. In cases where the nacelle is installed when partially preassembled, one or more elements may subsequently be lifted into position on the installed nacelle. This may include the drivetrain or elements thereof, and/or a power management system or elements thereof. If required, a hub may be attached to the driveshaft of an installed nacelle. In some cases, a hub may be attached to the nacelle in the form of a complete rotor. Often, blades are attached one by one to an installed hub, atop a tower.

When lifting a wind turbine element into position during construction, especially when using a crane or similar lifting equipment, the orientation of the element being lifted may need to be kept under careful control in order to ensure its correct positioning in relation to its attachment point. The same need for controlling the orientation of a wind turbine element may arise during dismantling or servicing operations, in which it may be required to bring a lifting yoke into a required orientation in relation to a wind turbine element at a wind turbine, for connecting the yoke with the wind turbine element. Wind turbine elements are typically very heavy and may be bulky. Manoeuvring such objects, typically suspended from a crane can be difficult. Ambient wind can make the task of orienting or aligning a suspended wind turbine component additionally difficult. The increasing size of wind turbines and their constituent elements makes orienting suspended elements increasingly challenging.

According to traditional practice when lifting large loads, taglines may be connected to the load itself or to a load-supporting yoke. The taglines may be controlled by operators, usually at ground level. This can have safety implications for operators, especially when loads increase and when forces on the loads become greater. It has also been suggested to connect taglines to more or less automated winch systems disposed wholly or partly on a crane. Examples of tagline winch systems on cranes are given in US2012/0328408 or WO2008/061797 or WO2015/165463. According to the latter of these citations, the control of the position and rotation of the suspended load is performed by tagline winch actuators from signals of at least one measuring unit with signal transmitter located on the load and measuring angles or changes in angles over time which is transmitted to and processed in a central monitoring- and control unit which performs control of rotation and position of the load by multiple transmitting of compensatory control signals to relevant actuators for tag lines and the crane main wire, from multiple load signals which are processed in the central monitoring- and control unit. These systems often require modifications to cranes, with attendant certification requirements. Hence, these systems imply a significant capital expense, installation expense and in some cases, they require to be individually adapted, depending on a crane type, load capacity or design. Certification of tagline systems at a crane may be time consuming. In DE2356504, it has been proposed to avoid the need for taglines when connecting a lifting yoke frame to a cargo container, by fitting controllable blowers to the yoke. In DE102012010019, it is suggested to connect directionally adjustable fins to a lifting yoke for a wind turbine blade, the directionally adjustable fins being combined with directionally adjustable blowers, which blowers may also be slidable back and forth along a length direction of the yoke. The previously suggested use of blowers at a suspended lifting yoke does not provide good controllability of the angular orientation of a bulky, heavy load, in terms of adjustability, accuracy or stability.

JPH10305989A discloses an orientation controllable, horizontal beam type yoke suspendable from a crane wire and equipped with variable thrust blowers generating a horizontal thrust to control the yoke orientation about a vertical axis; the yoke having a suspended load and wherein at a side of the yoke is attached equipment for blower control; the control equipment together with the yoke beam is housed in a generally flat wing cross-section shaped cover assembly. This yoke also comprises two telescopic adjustable joints which can adjust the distance between the blowers, such that the joints can have a collapsed configuration and an extended configuration.

JP2016210607A discloses to provide an attitude control device and an attitude control method for a suspended load, which are enabled to adjust a revolving force to act on a suspending beam-type yoke finely, by using a thrust generator for generating a jet flow, which attitude control device comprises: a suspending beam type yoke; thruster groups for producing a jet flow; and turntables for making the angles of the thruster groups for the suspending yoke variable in a horizontal plane thereby to support the thruster groups at the end part of the suspending yoke; the directions of the thruster groups are changed in a horizontal plane so that a turning force to be applied to the suspending yoke is adjusted to control the attitude of a suspended load. EP2886503A1 relates to a beam type yoke for lifting heavy objects with at least two fork arms or with one fork arm and at least one lifting strap for receiving the objects, with at least one vacuum holding device is arranged at support points of the objects; in an embodiment, the beam type yoke comprises a control element and control unit configured to change the orientation such that an oscillation of the yoke and thereby of the suspended load can be counteracted; the control element may comprise a rotor or thruster.

### SUMMARY OF THE INVENTION

It is proposed to provide an apparatus for orienting a suspended loads during lifting operations. Accordingly, the invention proposes a lifting yoke as defined in appended claim 1. Further optional features thereof are defined in appended claims 2 to 7. It is also proposed to provide a lifting and positioning method for a suspended load. Such a method is defined in appended claim 8. It is still further proposed to provide a lifting and positioning method for a suspended lifting yoke. Such a method is defined in appended claim 9. Further optional features of said methods are defined in respective subclaims 10 to 13. The invention and various optional aspects thereof will be described in particular with reference to drawings, in which optional aspects of the invention are illustrated by way of non-limiting example.
Figure 1 shows a simplified, three-dimensional view of a load, in the form of a wind turbine blade, suspended in a gripper type yoke including optional aspects of the invention;
Figure 2 shows an orthogonal view of a gripper-type lifting yoke according to optional aspects of the invention;
Figures 3a-c show schematic, not-to scale, simplified respective plan, rear and end views of a gripper type lifting yoke showing optional aspects of the invention;
Figure 4 shows a simplified schematic diagram of a lifting yoke including actuator and control elements according to optional aspects of the invention;
Figure 5 shows a schematic plan view diagram of a lifting yoke including telescopic steering arms according to aspects of the invention;
Figures 6a-b show additional details of a telescopic steering arm according to particular optional aspects of the invention;
Figure 7 shows a hinged thruster according to an optional aspect of the invention;
Figure 8 shows a schematic plan view diagram representing a lifting yoke including thruster arms according to additional optional aspects of the invention;
Figure 8a shows a plan view diagram representing a lifting yoke whose steering arms are removed according to additional optional aspects of the invention; Fig. 8b shows a plan view diagrams representing removable steering arms, according to additional optional aspects of the invention;
Figure 9 shows a simplified view of an alternative embodiment of a steering arm including some combined features of the invention;
Figures 10a and 10b show schematic plan views representing foldable steering arms on a lifting yoke according to and including some additional optional aspects of the invention;
Figure 11 shows a still alternative schematic plan view of a variant of a lifting yoke having combined foldable and telescopic steering arms;
Figure 12 shows a simplified view of a construction or service site at a wind turbine in the field;
Figure 13 shows a further optional aspect of the invention, operating in a wind damping mode.

### DETAILED DESCRIPTION

According to the invention a lifting yoke 10, configured for supporting a wind turbine element while suspended from a bearing wire 16, comprises steering arms 30 extending in mutually opposite directions, radially away from a bearing axis 17 of the yoke 10, and beyond the yoke's frame 15, wherein a controllable thruster 20 is provided on at least two respective steering arms 30 towards a distal end 44 thereof. Using the thrusters 20, spaced out on steering arms 30, the angular orientation about a bearing axis 17 - of even a large, heavy load 1 in the yoke 10 - can be adjusted with a high degree of controllability, stability and accuracy. The provision of thrusters 20 on steering arms 30 at a lifting yoke 10 both magnifies the turning or stabilising effect on a yoke 10 or load 1, of a given amount of thrust produced by a thruster 20. It also increases the controllability of the load's 1 or yoke's 10 angular orientation. Thrusters 20 can be adjusted to operate between a wider range of thrust output levels than would be possible without the use of steering arms 30. For example, a low level of thrust, applied to the thrusters 20 may enable a small angular adjustment of the suspended load 1, or may enable to stabilise the load 1 in a light breeze. The possibility to adjust a load's orientation using low thrust levels may also allow thrusters 20 to be operated for longer using a given power supply 56 such as e.g. a battery.

A steering arm 30 may be attached to a yoke frame 15 at a steering arm-to-yoke interface 29. A steering arm 30, when in its deployed configuration at a lifting yoke 10 extends in a horizontal plane away from the bearing axis 17 by more than 60% of the horizontal distance from the bearing wire to the yoke frame perimeter, when measured on a horizontal line between the relevant steering arm thruster 20 and the bearing axis 17. In particular, when measured from a mid-point of a thruster 20 to the bearing axis 17.

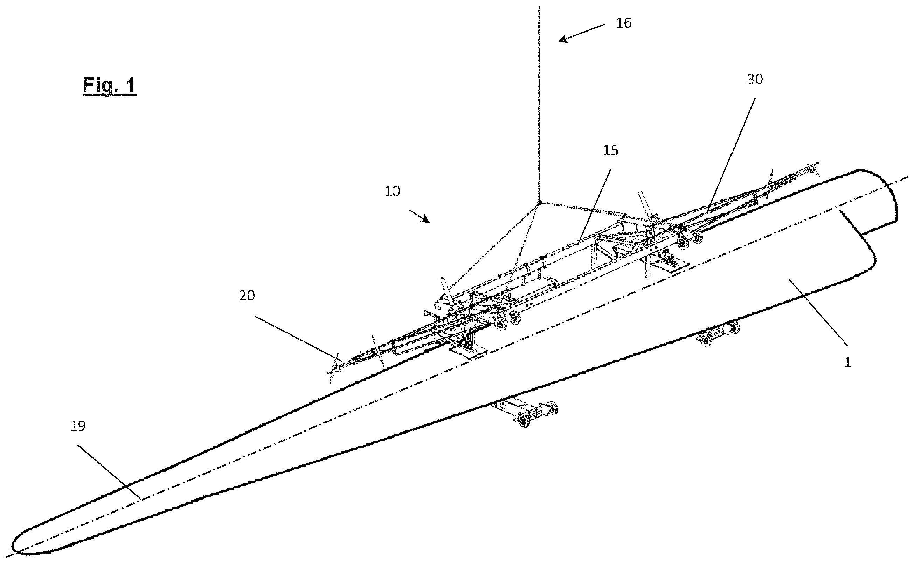

Preferably, the yoke 10 is configured for supporting the load 1 in a fixed relation to the yoke 10. Therefore, when a load 1 is supported in said yoke 10, a change in the yoke's 10 orientation corresponds to a change in the load 1 orientation. The bearing axis 17 may in particular be a vertical axis. The bearing axis 17 may be coincident with a bearing wire 16 of a crane 3, from which the yoke 10 is suspended. The yoke 10 may be connected by a shroud (see e.g. Fig. 1) or other lifting interface such as a pulley type system, suspended from a bearing wire 16.

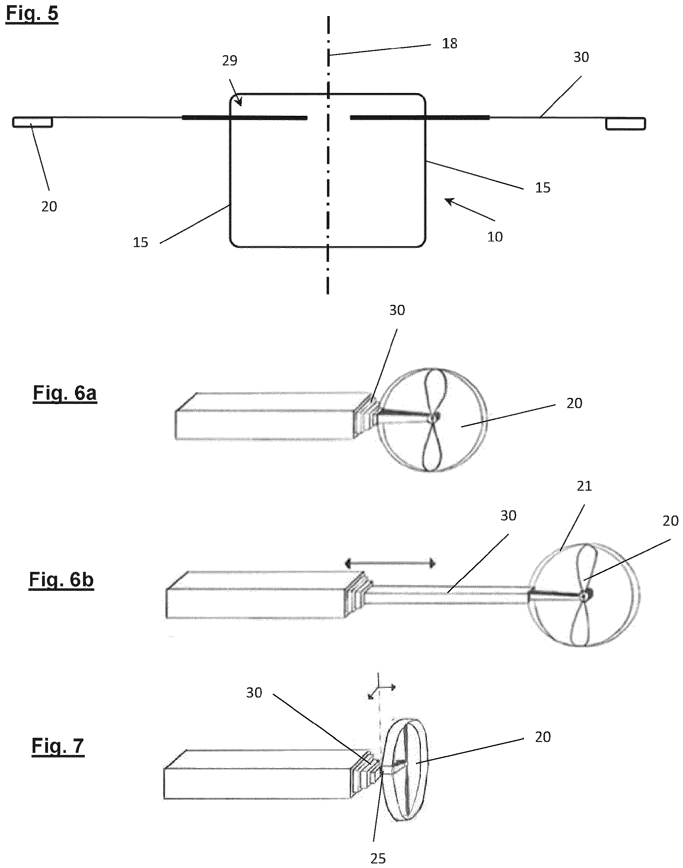

Transport, handling, construction, servicing and other manipulation operations of wind turbine components typically take place in the field. Such operations require hardware such as a lifting yoke 10 for performing the relevant operations. The hardware needs to be transported to the relevant handling location of a wind turbine element in the field, which can involve transportation over considerable distance and to remote, possibly inaccessible locations. Transporting bulky handling hardware can be a factor in increasing operating cost of construction, transport or servicing etc. Hence, in a further aspect of the invention, a steering arm 30 is configured such that it is movable between a collapsed configuration and a deployed, extended configuration in relation to the yoke 10. The collapsed configuration of the steering arm 30 may correspond to a transportation or shipping configuration of the yoke 10, while the deployed, or extended configuration of the steering arm 30 may correspond to an operational configuration of the yoke 10, for lifting. In particular, prior to a lifting operation using the yoke 10, the steering arm 30 may be extended from its collapsed configuration. This will increase the compactness of the lifting yoke 10, when not in an operational configuration. Preferably at least two steering arms 30 at a yoke 10 may be collapsible. Preferably steering arms 30 at mutually opposite sides or ends of a yoke 10 may be collapsible. Preferably all steering arms 30 at a yoke 10 may be collapsible. When in a collapsed configuration, the length of a steering arm 30 extending beyond the yoke's frame when in a deployed configuration thereof, may be reduced by one third or more. Preferably, the said length may be reduced by one half or more. Still preferably, the said length may be reduced by two-thirds or more. Optionally, a steering arm 30 may be collapsed into a folded position against the yoke frame 15. Optionally, a steering arm 30 may be collapsed into a folded position extending at least partly within a perimeter of the yoke frame 15. A steering arm 30 may comprise one or more hinges 35 to enable a folding extension or collapsing action thereof. A steering arm 30 is collapsible into a telescopically retracted position at the yoke 10. Optionally, a steering arm 30 may be collapsed into a telescopically retracted position, at least partly within a perimeter of the yoke frame 15. A steering arm 30 thereby comprises telescopic elements (see e.g. Figs. 5, 6a, 6b, 7, 9, 10a, 10b, or 11) to enable telescopic retraction thereof into a collapsed position or extension thereof into a deployed position. Preferably, the yoke frame 15 may comprise one or more stowage bracket 77 arrangement configured for retaining a steering arm 30 in a collapsed configuration thereof. Optionally, an interface between the yoke frame 15 and a steering arm 30 may be configured to enable the steering arm 30 to be securely fixed to, and quickly removed from, the yoke frame 15. A stowage bracket 77 arrangement at the yoke frame 15 may be configured to stow one or more removed steering arm 30 at the yoke frame 15. Preferably, said stowage bracket 77 arrangement may be configured for stowing one or more removed steering arm 30 within a perimeter of the yoke frame 15.

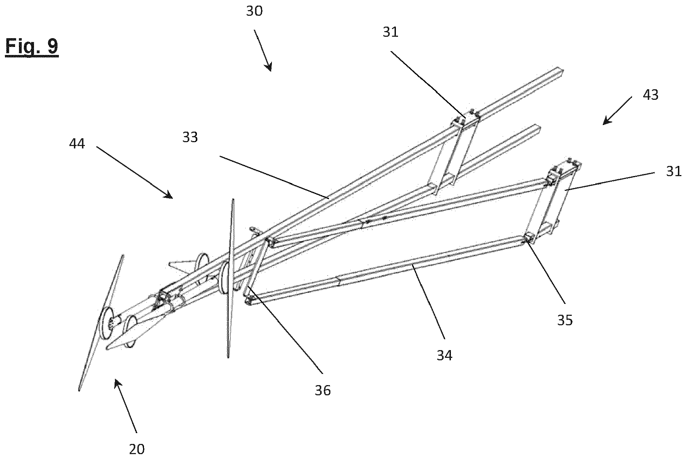

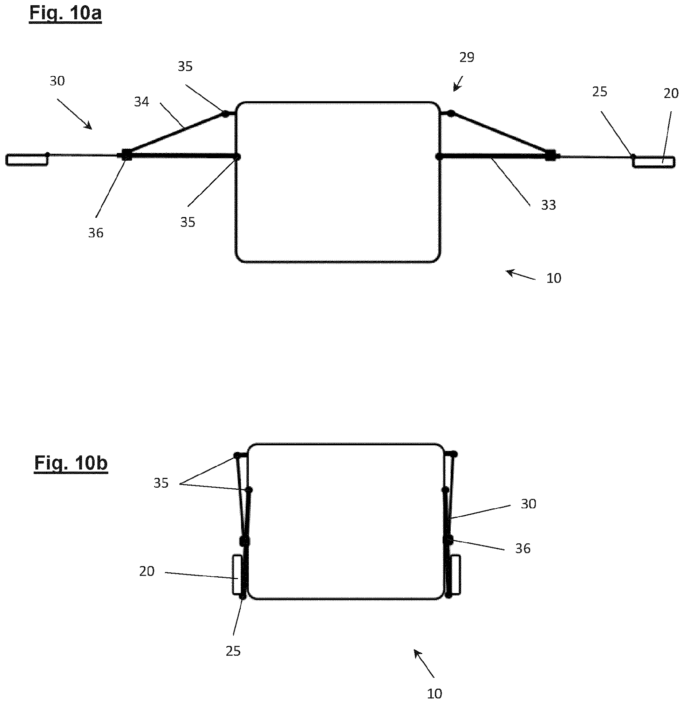

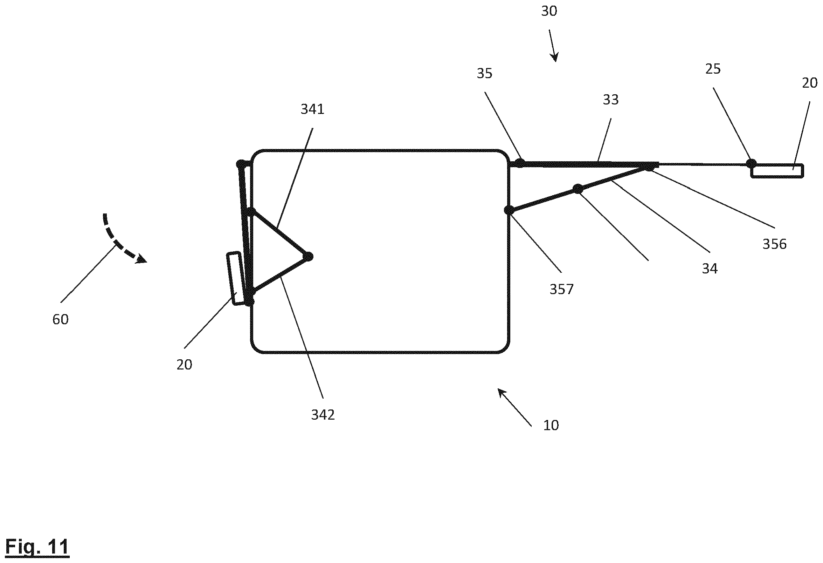

In optional aspects, a steering arm 30 may be retractable into a collapsed configuration by means of one or more hinges 35 on the arm 30. In particular, a steering arm 30 may be movable between a collapsed configuration and a deployed configuration by means of one or more hinges 35 on the arm 30. A hinge 35 may advantageously be placed towards a proximal end 43 of a steering arm 30. Preferably, a hinge 35 may additionally be provided between a proximal end 43 and a distal end 44 of a steering arm 30. Additionally, a steering arm 30 is retractable into a said collapsed configuration by means of a telescopic arrangement along the arm 30. In particular, a steering arm 30 is movable between a collapsed configuration and a deployed configuration by means of a telescopic arrangement on the arm 30. Advantageously, a telescopic arm housing may be arranged towards a proximal end 43 of a steering arm 30. Alternatively or additionally, a steering arm 30 may be retractable into a collapsed configuration by means of a releasable steering arm-to-yoke interface 29 at the proximal end 43 of the arm 30. In particular, a steering arm 30 may be movable between a collapsed configuration and a deployed configuration by means of a releasable yoke interface 29 at the proximal end 43 of the arm 30. A telescopically retractable arm 30 is illustrated by way of example in Figs. 6a and 6b. Further variants of a retractable steering arm 30 are illustrated by way of examples in Figs. 5, 7 and 9 or others. In embodiments, a steering arm 30 may be both foldable by hinges 35 and telescopically retractable and optionally also removable from a yoke frame 15. Such arrangements are illustrated in various forms by way of example in Figs. 10a, 10b or Fig. 11. In Fig. 9 is shown an example of a steering arm 30 having both telescopic elements and also a releasable yoke connection element 31 at its proximal end 43. Preferably, at least one steering arm 30 may include a plug or socket 38, 39 for electrical connection between a said thruster 20 fixed thereon and said yoke 10. This feature may be especially advantageous in connection with a steering arm 30 which is configured to be removably fixed to a yoke 10. Preferably, an electrical connection 37 may connect electrical elements at a yoke 10, such as a thruster control unit 54 and/or a power supply 56, with a thruster 20 on a steering arm 30.

In optional aspects, a hinge 35 may be provided between a thruster 20 and a steering arm 30. The thruster 20 may thereby be foldable against the steering arm 30 for compactness. This feature may be combined with the feature of a collapsible arm 30. Preferably, a steering arm 30 may comprise one hinge between itself and a thruster 20. Preferably a further hinge may be provided at a steering arm, for example towards a proximal end 43 thereof or between a proximal end 43 and a distal end 44 thereof.

Optionally, the thrusters 20 may be arranged equidistant from the bearing axis 17 of the lifting yoke 10. This arrangement may provide improved balance in the thrust force generated from opposite thrusters 20, ensuring a reduced tendency for the load 1 or yoke 10 to oscillate or swing as a result of the actuation of a thruster pair. Moreover, such an arrangement may ensure that the thrusters 20 on opposite steering arms 30 at opposite sides of a bearing axis 17 may have equal power. Hence, in a further optional aspect of the invention, the thrusters 20 on opposite sides of a bearing axis may have equal thrust power output rating. In particular, thrusters 20 may be arranged in pairs of equal power thrusters 20 on opposite sides of a bearing axis 17 and equidistant therefrom. More particularly, thrusters 20 may be arranged symmetrically about said bearing axis 17, and may have equal power output ratings. An additional advantage of providing all thrusters with equal power ratings arises from standardisation and modularity of the yoke elements. Moreover, drive outputs from a control arrangement to the thrusters can thereby all be configured with the same output power ratings and control characteristics.

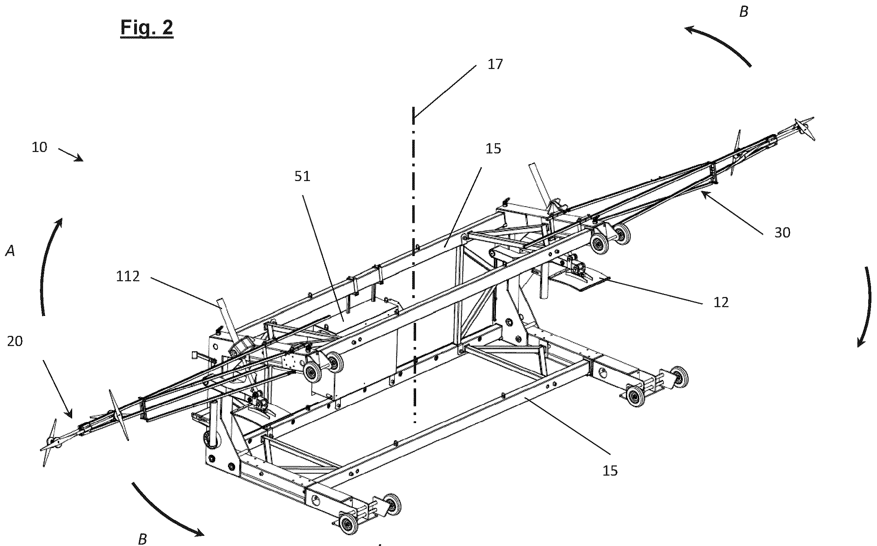

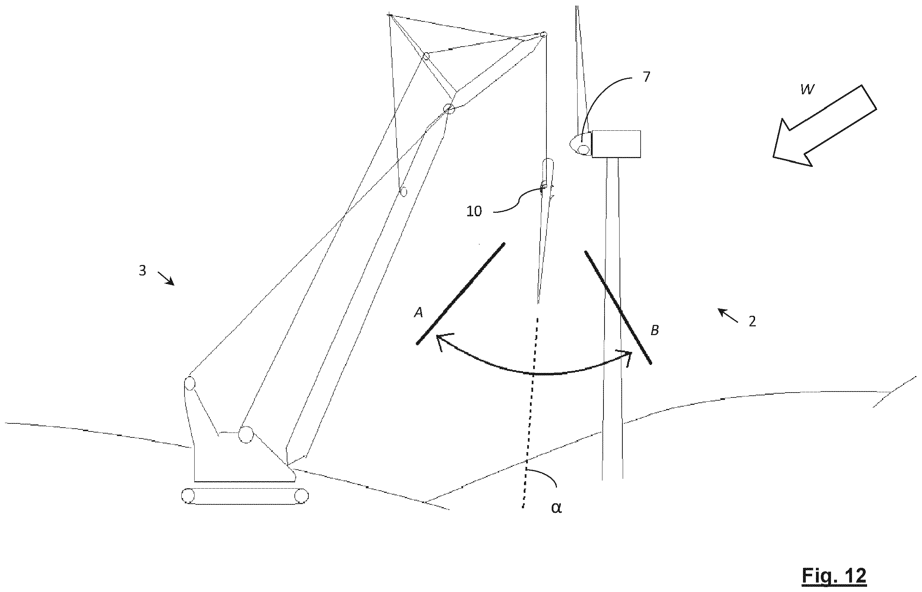

Each thruster 20 is directionally reversible, capable of providing thrust in mutually opposite directions (see arrows A, B in Fig. 12 or in Fig. 2).

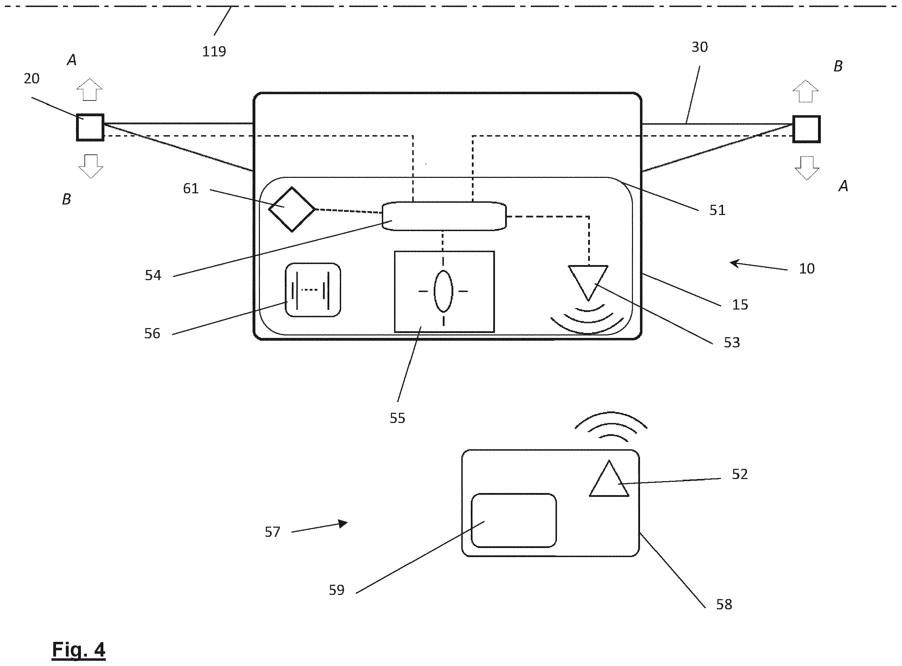

Preferably, the angular orientation of the yoke 10, and thereby of a load 1 supported in said yoke 10, about said bearing axis 17, in a horizontal plane, is controllable by a remote control unit 57, in particular by an operator. See e.g. remote control unit 57 illustrated by way of example in Fig. 4. This may be called manual operation and may be useful, for example when an operator sitting at an installed wind turbine 2 seeks to maintain a required orientation of a suspended wind turbine element, while it is being docked at a particular location on the wind turbine. Alternatively, during a dismantling operation of a wind turbine element, the element's orientation in a horizontal plane may be maintained during disconnection. See e.g. Fig 12. If conditions are windy, such a mode of operation may prevent damage during the act of disconnecting an element. This may also be useful if there is limited space for manoeuvring the removed element. Still preferably, or additionally, an orientation adjustment arrangement at a yoke 10 may comprise an orientation control system 51 at said yoke, in communication with said thrusters 20. A remote control device 57 may co-operate with a receiver 53 at said control system 51. A transmitter 52 may therefore be provided at a remote control unit 57. A said orientation control system 51 may in particular be an automatic orientation control system 51. The control system 51 may be mounted to the yoke 10. The control system 51 may preferably include an orientation sensor 55 and a thruster control unit 54. Preferably the orientation control unit 51 may be associated with an electric power supply 56. A power supply 56 may be mounted on the yoke 10, especially during operation of the lifting yoke. Preferably a said control unit 51 may include a power supply 56.

The invention also relates to a method of lifting and positioning a load 1, using a yoke 10 according to the invention and including the steps of bringing the load 1 to a required location, preferably being a connection location at a wind turbine 2, while maintaining the load 1 in a predefined orientation *α* in relation to the connection location. This is achieved using the thrusters 20 on steering arms 30. Preferably, the load's orientation angle *α* in relation to the connection location is controlled using an orientation control system 51 provided on the yoke 10. Optionally, the method may be carried out using a remote control unit 57 in communication with said control system 51. Optionally, the method may be carried out automatically using an orientation sensor 55 associated with said control system 51. Preferably the method may include securing the load 1 to the wind turbine 2 at the required connection location. Optionally, the method may be carried out automatically using said orientation sensor 55 and subsequently manually using a remote control unit 57. Optionally, the final steps of bringing said load 1 to said connection location, for connection between the two, may be carried out using a said remote control unit 57. By way of example, a connection location for e.g. a nacelle may include a tower top yaw deck. A connection location for e.g. a wind turbine blade may include a pitching ring at a hub 7. The method of the invention may in particular be implemented during wind turbine construction. The method of the invention may for example be implemented during servicing a wind turbine 2 or elements thereof. The method may preferably include extending a steering arm 30 of a yoke 10 from a collapsed to an extended configuration thereof, in particular prior to lifting said load 1.

Furthermore, the invention also relates to a method of lifting and positioning the lifting yoke 10 at a load 1 to be lifted. Such a method may in particular be useful at a stage of bringing a lifting yoke 10 to a wind turbine element at a wind turbine 2, for grasping or supporting the element prior to dismantling e.g. for servicing the element. The method may preferably include extending a steering arm 30 of a yoke 10 from a collapsed to an extended configuration thereof, in particular prior to lifting said yoke 10.

In optional aspects, the method may include providing an orientation control system 51 at said lifting yoke 10 in communication with said thrusters 20 and automatically adjusting the horizontal, angular orientation of the yoke 10. To this end, the orientation control system 51 may in particular include an orientation sensor 55. The method preferably includes: defining, in said orientation control system 51, a required angular orientation *α*; and detecting, by means of one or more said sensors 55 in said orientation control system 51, an angular deviation in a given direction A, B from said required angular orientation *α*; and automatically actuating a thruster 20 by means of said control system 51 to provide a directional force acting on said yoke 10, and/or on a load 1 supported in said yoke 10, which force acts in a direction opposing said detected angular deviation. An angular deviation detected by the sensor 55 may be an absolute deviation from said required angular orientation *α*, or it may be an acceleration in a direction away from said required angular orientation *α*.

In optional aspects, the method may further include adjusting the angular orientation of the yoke 10, and/or of a load 1 supported in the yoke 10, in a horizontal plane about a bearing axis 17, using remote control of the orientation adjustment arrangement, e.g. using a remote control unit 57 operated by an operator.

Additional general and specific features may be appreciated with particular reference to the drawings. For example, Fig. 12 shows an example of a wind turbine site which may be a wind turbine installation site or a wind turbine service site. For example, while connecting or re-connecting a load 1 in the form of a wind turbine blade to a connection location such as a hub 7 at a wind turbine 2, by means of a crane 3 and a yoke 10, there may be a need on one hand to keep the load 1 under control, perhaps under windy conditions, and on the other hand, to ensure that the load 1 is positioned in exactly the correct orientation *α* for connection to the wind turbine 2. With ambient wind *W* there may be a tendency for the load 1 to be pushed out of its intended orientation *α*. This may pose a risk that the load 1 may collide with a part of the wind turbine 2 or crane or other equipment during lifting. It may also pose a risk of damage to the load 1 or to the connection location at a wind turbine 2, if the load 1 is out of orientation during a connection phase. On Fig. 12, a swivelling movement of the yoke 10, or load 1, about its bearing wire 16, or bearing axis 17, is indicated by direction indicator *A* and its opposite direction *B*. It may be that during a lift, a first orientation *α* is needed for avoiding collisions with other elements, e.g. while the load 1 is on the way up or down, whereas during a connection phase between the load 1 and a wind turbine 2, a second, possibly different orientation *α* is needed. In any event, it may be necessary to ensure that the load 1 is kept under control, with regard to its horizontal angular orientation during a connection/disconnection phase and/or during a lifting/lowering operation. Furthermore, in an operation in which a yoke 10 is brought to a wind turbine element at a wind turbine 2, it may be necessary to control the angular orientation *α* of the yoke 10 during an approach movement of the yoke to the load 1, fixed to a wind turbine 2, and during a docking action of the yoke 10 to the load 1. If for example the wind *W* pushes the load 1 out of its intended horizontal orientation in a direction A, then there is a need to apply a force to the load 1 to push it in direction *B*, towards its intended orientation *α*. For this, the yoke 10 may be induced to swivel about a vertical axis, in particular a bearing axis 17, preferably coincident with a bearing wire 16 of the crane. For this, the invention provides a yoke 10 with steering arms 30 comprising thrusters 20, an example of which is illustrated in Figs. 1 and 2. If an ambient wind *W* tends unevenly to push against a load 1, that is to say if a wind *W* tends to push more against one end of a suspended load 1 than the other, then the load 1 may tend to swivel away from its momentary angular orientation.

A load 1 in the form of a wind turbine blade may be supported in a yoke 10 by any suitable means, such as by a gripper 12 comprising gripper elements on gripper arms. The gripper arms may be associated with an actuator 112 configured for opening and closing the gripper 12 between a supporting position of a load 1 and a releasing position. Other support elements may be envisaged in addition, or as alternatives, such as slings, friction surfaces or shaped recesses or any clamp-type mechanism. The yoke 10 shown in Figs. 1 and 2 has a construction from two parallel, spaced apart "C"-shaped end-frame elements, whose openings are facing in the same direction. The two "C"-shaped end-frames are joined in a longitudinal direction of the yoke 10 by a set of generally parallel beams. In the example shown, there are four generally parallel longitudinal beams which define a generally rectangular shape of the yoke's frame 15 when seen from above, below or from the rear. A view of the yoke 10 from the front is a view into the yoke's longitudinal opening, although the frame 15 of the yoke 10 would also appear generally rectangular when seen from directly in front. At the tips of each of the "C"-shaped end frames, bumpers may be provided for preventing damage to a load 1 such as a wind turbine blade or other longitudinal element, while being placed in the yoke 10. The bumpers shown in Figs. 1 and 2 are in the form of rollers. In the examples of Figs. 1 and 2, the yoke 10 may be suspended from a bearing wire 16 of a crane 3 using any suitable means, such as a shroud, shown in Fig. 1, connecting the bearing wire 16 to each corner of the yoke 10. Other interfaces between a yoke 10 and a bearing wire 16 may be envisaged, such as a direct connection from the bearing wire 16 to a frame element of a yoke 10 or a pulley type connection. A connection or interface between a bearing wire 16 and the yoke 10 may in particular allow a swivelling movement of the yoke 10 about the bearing wire 16, and thereby about the bearing wire axis 17. The yoke 10 is configured for receiving a load 1. The yoke 10 is configured for supporting a load 1. In particular, the yoke 10 is configured to be suspended from a bearing wire 16. More particularly, the yoke 10 is configured to be suspended from a bearing wire 16 and for supporting a load 1 during a lift thereof. The yoke 10 is also configured to be suspended from a bearing wire 16 and to receive a load 1, for example to dock with a load 1, such as a wind turbine element connected to a wind turbine 2.

As mentioned, the yoke 10 includes a frame 15, on which various auxiliary elements may be supported. For example, the yoke 10 illustrated in Figs. 1 and 2 comprises a frame 15 which supports a clamp type gripper 12 and an interface to a bearing wire 16. The yoke frame 15 may also support the aforementioned bumpers. The yoke frame 15 also provides an interface to steering arms 30. A steering arm 30 may preferably comprise a thruster 20, arranged towards a distal end 44 thereof. Preferably, each steering arm 30 may comprise a thruster 20. A thruster 20 may be provided in the form of a blower such as a propeller or turbine. Optionally, a thruster 20 may comprise a rocket motor. Optionally, each thruster 20 may comprise a cluster of thrust elements, as illustrated for example more clearly in Fig. 9.

The steering arms 30 extend longitudinally and project in a direction away from the bearing axis 17. The steering arms 30 project beyond the yoke frame 15, in a direction away from the bearing axis 17. Optionally, the steering arms 30 may extend in a direction radially away from the bearing axis 17. Optionally, the steering arms 30 may extend symmetrically away from a plane bisecting the yoke 10 perpendicular to its longitudinal axis 119. Optionally, the steering arms 30 may extend symmetrically and radially away from said bearing axis 17. Preferably, steering arms 30 may be arranged at a yoke 10 in opposite pairs, about the bearing axis 17 or about a plane 18 coincident with the bearing axis 17. Preferably, opposite steering arms 30 of a pair each comprise the same number of thrusters 20. Preferably, the thrusters 20 arranged on opposite steering arms 30 of a pair are each arranged correspondingly equidistant from the bearing axis 17 or from a plane 18 coincident with the bearing axis and passing perpendicular to the main axis 119 of the yoke 10. This may correspond to a mirror-image type arrangement of the thrusters 20 on steering arms 30.

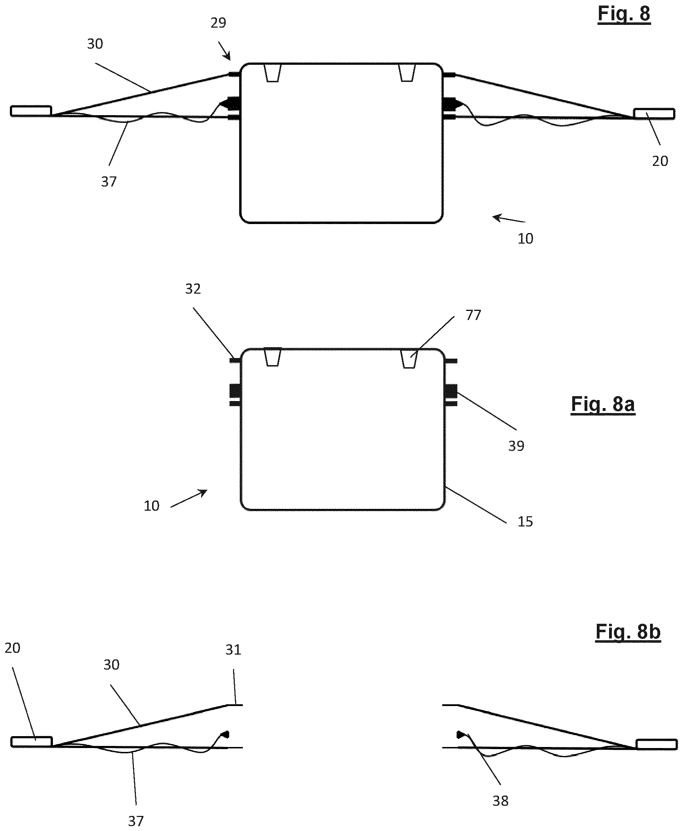

The steering arms 30 are connected at a proximal end 43 thereof to the frame 15 of the yoke 10. The type of connection between the steering arms 30 and the yoke frame 15 may be of any suitable type. Preferably, the steering arms 30 may each be connected to the yoke frame 15 at a steering arm-to-yoke interface 29. This interface 29 may be fixed or separable. A separable interface 29 may allow removal of a steering arm 30 from the yoke frame 15. By way of example, illustrated in Fig. 8, a separable yoke interface 29 may comprise a yoke connection 31 at a steering arm 30 and a steering arm connection 32 at the yoke 10. A steering arm connection 32 may include a bracket or socket at the frame 15. Likewise, a yoke connection 31 may include a bracket or socket at the steering arm 30. A connection shaft may be inserted into a connection socket for securely fixing a steering arm 30 to the yoke frame 15. Alternative arrangements, such as fixed arrangements of an interface 29 between a steering arm 30 and a yoke frame 15 may be envisaged, such as by welding.

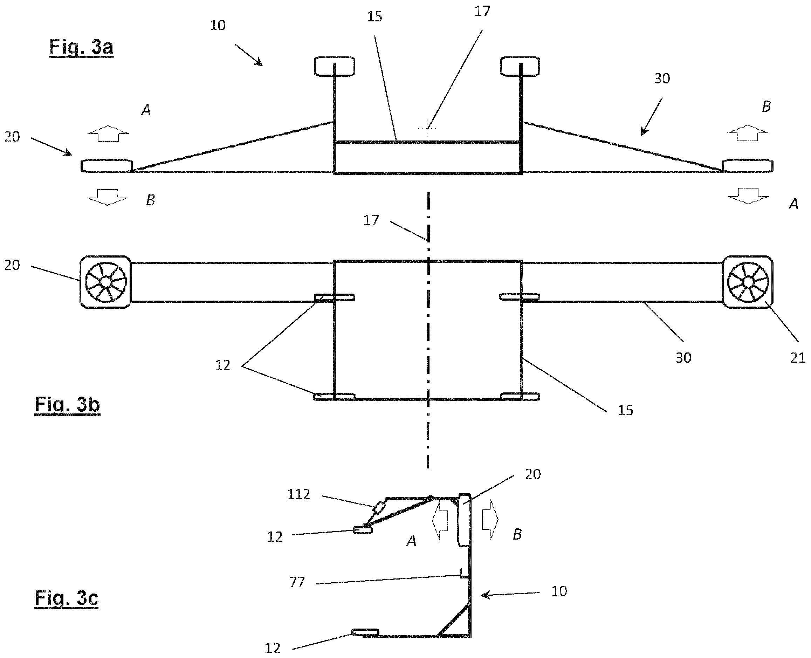

Fig. 3a-c illustrate schematically a possible layout of a yoke 10 according to optional aspects of the invention. Steering arms 30 are shown, extending in opposite directions away from a from a bearing axis 17. For stability, each steering arm 30 may comprise more than one strut 33, 34. For example, a steering arm 30 may comprise a first strut 33 and a second strut 34. The first and second struts 33, 34 of a steering arm 30 may be spaced apart at a proximal end 43 of a steering arm, while converging and joined together towards a distal end 44 thereof. Details of an example of a steering arm 30 comprising first and second struts 33, 34 which are joined towards a distal end 44 thereof, is shown in Fig. 9. Each strut 33, 34 comprises a yoke connector 31 for connection to a steering arm connector 32 at an interface 29 at a yoke frame 15. Each thruster 20 may be selectably configured for providing thrust in a forward and in a reverse direction, as indicated by arrows in diagrams of Figs. 3a and 3c. In optional aspects, a control system 51 in connection with a thruster control unit 54 may be configured to ensure that thrust action at a yoke 10 is provided by two or more thrusters acting together, in unison. For example, thrusters 20 on oppositely extending steering arms 30 may respond to a thrust actuation signal in such a way that they act together to provide a rotation moment about the yoke's bearing axis 17. In other words corresponding, opposite thrusters may each apply a thrust in opposite directions, amounting to a single rotation direction *A* or *B* about the bearing axis 17. The yoke 10 and any load 1 (not shown in Fig. 2 or 3) supported in it will tend to rotate about the bearing axis 17 as a result of the thrust action of the thrusters 20.

In embodiments, thrust direction of a thruster 20 may be fixed in relation to a load 1 or yoke 10. In other optional aspects, a thruster's orientation may be steered in relation to a load 1 or yoke 10. A thruster 20 may for example comprise a pair of thruster units oriented in opposite direction. A steering arm 30 may thereby be subjected to a thrust action in a first direction from a first thruster unit of a thruster 20, and the same steering arm 30 may also selectably be subjected to a thrust action in a second, e.g. opposite, direction from a second thruster unit of a same thruster 20.

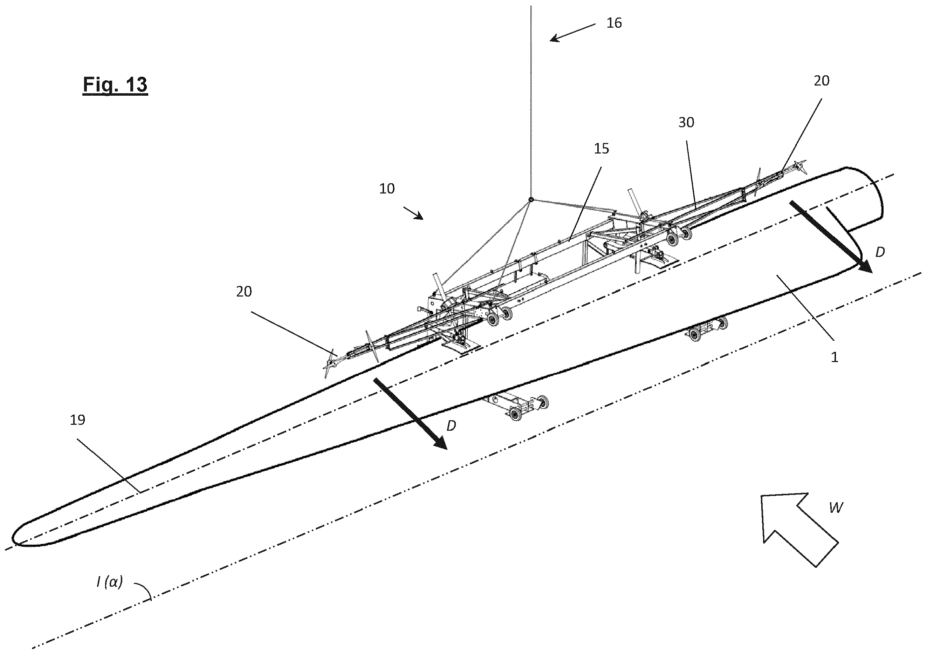

As already mentioned, in order to ensure the load 1 is brought into its intended orientation *α*, the thrusters 20 may be actuated to operate in opposite directions, thereby both tending to turn the load 1 in a clockwise direction A or anticlockwise direction *B* until the load's main axis 19 is aligned with an intended, horizontal angular orientation *α*. In some cases, a load 1 may, by this action, be brought back into the correct orientation *α*, albeit while remaining out of its intended alignment. A load 1 which is in a correct orientation *α* but which at the same time lies offset from its intended alignment, may more particularly have its main axis 19 parallel to and offset from the intended axis *l* (see Fig. 13) having an orientation *α*. This may occur for example when an ambient wind *W* forms a crosswind in relation to the main axis 19 of the load 1 (or in relation to the main axis 119 of the yoke 10). If the thrusters 20 at opposite ends of a yoke 10 act in opposition to each other, then the load 1 may settle in the correct orientation *α*, but pushed off its intended axis *l*, i.e. out of alignment with its intended axis *l* - e.g. parallel to its intended orientation axis *l*. Similarly, in other cases, the effect of a cross wind *W* acting on a load 1 may be to push the load 1 off its intended axis *l*, but parallel to its intended orientation angle *α*. When the suspended yoke 10 and/or the load 1 it carries is pushed off its intended line of alignment *l*, this may, if caused by a crosswind *W* coincide with the bearing wire 16 and thereby the bearing axis 17 being out of alignment with the vertical direction. A thrust action of thrusters 20 in a common direction D towards the intended alignment axis *l* may re-establish the bearing wire 16 to lie in a vertical direction. A yoke 10 may thus be operated to bring the yoke 10 or and/load 1 into the intended alignment *l*, by additional control of the thrusters 20 to apply a lateral thrust component to the yoke 10, i.e. a thrust component in a direction lateral to the yoke main axis 119.

In such a case, the thrusters 20 may be operated to provide thrust in a same direction D, to bring the load 1 into its intended alignment. In particular, one thruster 20 or set of thrusters 20 on a steering arm 30 may apply thrust in one direction A while another thruster 20 or set of thrusters 20 on an opposite steering arm 30 may apply a thrust in a same, but rotationally opposite direction *B*, thereby tending to move the load 1 in a translation movement D towards its intended alignment axis *l*. A translation action by the thrusters 20 may be in additional to an action of the thrusters 20 tending to correct an angular deviation. Optionally, a load 1 or yoke 10 already aligned in an intended orientation *α* may be controlled to apply a translation movement *D* only, in order to move the yoke 10 or load 1 into a position in which the load axis 19 lies along the intended alignment axis *l*. Preferably, this position also coincides with the bearing wire 16 being vertical. In optional aspects of the invention, a control device 51 at the yoke may include a sensor capable of detecting a deviation of the yoke's bearing axis 17 from the vertical direction. Such a sensor may be an inclination detector, known as such in the art. Hence, in optional aspects, the thrust applied by thrusters 20 may be adapted to generate a lateral movement of the load 1 and/or yoke 10 in a direction transverse, or normal to its longitudinal main axis 19, 119. In some instances, the thrust applied by thrusters 20 on oppositely oriented steering arms 30 may be in a same direction and of a different magnitude. Such a control signal to the thrusters 20 would tend for example to counteract a crosswind *W* with a tendency to both push the load 1 laterally away from its intended alignment *l* and away from its intended angular orientation *α*.

The diagram in Fig. 4 shows control elements of a yoke 10 according to optional aspects of the invention. A yoke 10 may comprise an orientation control system 51 operationally associated with thrusters 20 on the steering arms 30. The control system 51 may comprise a thruster control unit 54. The thruster control unit 54 may output signals to the thrusters 20 which signals are calibrated to generate an amount of thrust needed to correct an angular deviation of the load 1 and/or of the yoke 10 from an intended angular orientation *α*. The reference line through the yoke 10 for measuring its own orientation may be a main axis 119 of a yoke 10 or a line parallel thereto. The control system 51 may comprise a power supply 56. In optional aspects, the thrusters 20 may be powered from the same power supply 56 as the control system 51. Alternatively, the thrusters 20 may be powered from a separate power supply than the control system power supply 56. In embodiments, a thruster power supply may be mounted to the yoke 10. Preferably, an orientation control system 51 may be mounted on the yoke 10. Optionally, the orientation control system 51 may be mounted directly on the load 1. Preferably, an orientation control system 51 included an orientation sensor 55. The orientation sensor 55 may be a gyroscope type sensor or magnetic sensor or other, such as a microelectronic orientation sensor and may rely on GPS or Hall effect or other effect for sensing absolute orientation or momentary changes in orientation. For example, a gyroscope device may, when the yoke 10 is rotated about a vertical axis, output a signal proportional to the rotational acceleration of the yoke 10. Similarly, a sensor 55 driven by changes on its orientation relative to the earth's magnetic field may output a signal indicative of its orientation. A processor in the thruster control unit 54, connected to the sensor 55 may determine a thruster output signal to be applied, in response to a signal from the sensor 55 representing a detected movement or orientation away from a predefined orientation. For example, a proportional-integral-differential (PID) control algorithm may be implemented in the thruster control unit, generating a thruster drive signal counteracting the deviation from a predefined or required or default orientation of the yoke 10. A required orientation of the yoke 10 may be predefined in the control system 51 using a data entry console 58, which in the example shown in Fig. 4, may be a wireless control device 57. Thereafter, during a lift of a load 1 or of the yoke 10, or during an operation for docking the yoke 10 at a component to be received in it, the control system 51 may operate in an automatic mode, in which thrusters 20 are automatically actuated in compensation of orientation deviations of the yoke 10, detected by a sensor 55. In a further optional aspect, the angular orientation of the load 1 or yoke 10 may be adjusted using a remote controlled device 57. This may take the form of a slight adjustment to the predefined, required orientation angle. For example, as an element, which forms a load 1, approaches a connection location, its predefined angular orientation, in which it is automatically maintained may turn out to be slightly out of the required orientation. In such a circumstance, an operator may add or subtract a small angle e.g. a degree or more, from the predefined angular orientation *α* by way of a final adjustment during a connection phase. For this, an operator may enter corresponding instructions using a display or keys on a user interface 59 of a remote control device 57. A transmitter/receiver 52 at the remote device 57 may transmit the relevant instruction via a receiver/transmitter 53 at the control system 51. Visual observation of the load 1 and/or yoke 10 by an operator may inform the need to make adjustments. Alternatively, more than one predefined orientation *α*₁, *α₂,...* may be entered and stored as pre-sets in the control system 51 or in the operator console 58. These may then be selectively applied by an operator at different stages during a lifting operation of the yoke 10. Thus, for example where a first orientation *α₁* is required to be maintained during initial stages of a lifting operation, the control system 51 may be instructed to keep the yoke 10 oriented accordingly. At a later stage of the same operation, a different orientation may be appropriate, at which point the control system 51 may be instructed to apply and follow a second, different orientation angle *α₂*. Optionally, the control system 1 may include an inclination sensor 61. A signal from the inclination sensor 61, tending to indicate an inclination of the yoke 10 away from the horizontal would indicate a deviation of the bearing axis 17 away from the vertical. This may be indicative that the load 1 and/or yoke 10 is pushed by a crosswind *W* away from its intended alignment *l*. A control signal from the thruster control unit 54 to the thrusters 20 may thereby both compensate for a misalignment from a predetermined angular orientation *α* as well as from a deviation from an intended alignment *l*.

Fig. 5 shows a collapsible steering arm 30 in the form of a telescopic arm in a telescope housing. The telescope housing may be attached to the yoke frame 15 at a steering arm-to-yoke interface 29 which in this embodiment may be a fixed interface 29. The steering arm 30 may be collapsed to a telescopically retracted position as shown in Fig. 6a. During a set-up phase of the yoke 10, for use, the telescopic steering arm 30 may be extended as shown in Fig. 6b. For some operations, the steering arm 30 may be operable in a partially extended configuration as shown in Fig. 6b. In optional aspects, and for further compactness during transport or when otherwise not in use, a thruster 20 at a steering arm 30 may be hingeably connected to the steering arm 30 via a thruster hinge 25, as shown in Fig. 7. In a further optional aspect, a thruster 20 may be provided with a protective radial cowling 21. In particular, a propeller type thruster 20 or turbine type thruster 20 may be provided with a protective radial cowling 21.

In optional aspects, a collapsible steering arm 30 may be retracted by means of a separable interface 29 between the yoke 10 and the steering arm 30 at the proximal end 43 of the steering arm 30. Such an arrangement is illustrated in Fig. 8 or Fig. 9. After a lifting operation, or prior to a transport operation or for storage of the yoke 10, the steering arm 30 may be disconnected from the yoke frame 11 and placed for example in a stowage position in a stowage bracket 77 at the yoke 10. The steering arm 30 may comprise a yoke connection 31 connectable to a steering arm connection 31 at the yoke 10. Electrical power to the thrusters 20 may be supplied via an electric cable 37 at the steering arm 30. The cable may be connectable to a power supply 56 at the yoke 10 via a plug 38 on the electric cable 37 and a socket 39 on the yoke 10, or vice-versa. Electric cables 37 may be power cables between a power supply 56 at the yoke 10 and the thrusters 20 on a steering arm 30. Electric cables 37 may include communication cables between a control system 51 at a yoke 10 and a thruster 20. Alternatively, a thruster 20 and an orientation control system 51 which are in communication, may be in wireless communication. In some embodiments each thruster 20 may include its own power supply. In such an arrangement, a cable 37 along a steering arm 30 may be a communication cable only.

An example of a steering arm 30 which is removably connectable to a yoke 10 and also telescopically collapsible is shown in Fig. 9. In this embodiment, also hinges 35 may be provided, to accommodate for a changing angle between a first and second strut 33, 34 of the steering arm. Also illustrated by way of example is a thruster 20 including four thruster sub units arranged towards a distal end 44 of a steering arm 30. In other embodiments, a thruster 20 may include one thruster unit or two thruster sub units.

For allowing a steering arm 30 to be moved between a collapsed and a deployed configuration at a yoke 10, one or more hinges 35 may be provided on a steering arm 30. This may be as an alternative to a telescopic collapsible arrangement or it may be in addition to a telescopic arrangement. Fig. 10a shows a hinged steering arm 30 in a deployed configuration. The arm has two struts, a first strut 33 and a second strut 34, spaced apart at their connection to the yoke frame 15, at an interface 29 therewith, and joined together towards a distal end 44 of the steering arm 30. The second strut 34 may be slidable on a first strut 33, via a slide connection 36 between the two. A collapsed configuration of the steering arm is shown in Fig. 10b. In the embodiment shown in Figs. 10a and 10b, the steering arm is both hinged and telescopic. The thruster 20 is shown with a thruster hinge 25 for added compactness when in a collapsed configuration.

In still further embodiments, a strut 34 may comprise multiple links joined together by hinges. In Fig. 11, there can be seen a second strut 34 comprised of a first link 341 and a second link 342. These two links 341, 342 may be hingedly joined together by an elbow hinge 355. A second link 342 of a second strut may be joined to a first strut at a wrist hinge 356. A first link 341 of a second strut may be joined to a frame 15 at a shoulder hinge 357. The shoulder hinge 357 of a second strut may in particular be spaced apart, on the frame 15, from a hinged connection 35 between the frame 15 and a first strut 33 of the steering arm 30. In the embodiment shown in Fig. 11, the steering arm 30 may be collapsible using the hinges 35, 355, 356, 357. The illustrated steering arm 30 may additionally be collapsible by a telescopic arm portion and a telescopic housing. The whole steering arm 30 may additionally be removable from the yoke, as illustrated in e.g. Figs. 8, 8a and 8b. A simple folding action in the direction of arrow 60 may enable the steering arm 30 to be moved from its deployed to its retracted configuration. For additional compactness, the thruster may be foldable on the steering arm 30 at a thruster hinge 25. The steering arm 30 may be additionally telescopically retractable.

A load 1 may comprise a wind turbine nacelle. The nacelle may be placed atop a tower in a lifting operation. The angular orientation of the nacelle in a horizontal plane about a bearing axis 17 may be controlled using the steering arms 30 with thrusters 20 described hereinbefore. Steering arms 30 extend longitudinally beyond the frame 15 in a horizontal direction. The main axis 19 of the load may be brought into a same orientation as a main axis of the yoke 10. The load 1 may be suspended beneath the yoke 10 by lifting cables or chains or straps or any other means. In an alternative embodiment, the load 1 to be lifted may have a main axis perpendicular to the main axis 119 of a lifting yoke 10. Optionally, the steering arms 30 may extend in opposite directions away from a bearing axis 17 and in a horizontal direction which is lateral to the main axis 119 of the lifting yoke. Preferably, in optional aspects, the yoke 10 may be configured such that its steering arms 30 extend in a direction which is parallel to or substantially aligned with a main axis 19 of a load 1 to be lifted by the yoke 10.

In the present context, a wind turbine element may in particular comprise a wind turbine rotor or component thereof, such as a hub or blade. A wind turbine element may comprise a nacelle or other element thereof such as a cooler or drivetrain or power management system. A wind turbine element may comprise a component of a drivetrain such as a drive shaft or gearbox or generator. A wind turbine component may also be a tower or tower segment. A wind turbine element may comprise any element of a wind turbine. A reference to a wind turbine may include a wind turbine under construction. For the avoidance of doubt, the term "lifting" may include the act or operation of lowering a load 1, especially of a wind turbine blade or nacelle. A crane referred to herein may include any lifting implement, in particular a crane or lifting implement dimensioned and configured to lift a wind turbine element in general or a given wind turbine element in particular. Orienting a suspended load may include maintaining a defined orientation thereof. The word "aspect" in the present context is intended to be understood as designating optional, not essential features, elements or embodiments of the subject-matter of the present disclosure.

## Claims

1. Lifting yoke (10) configured for supporting a load (1) while suspended from a bearing wire (16);
said yoke (10) comprising a frame (15) extending about a bearing axis (17);
said yoke (10) additionally comprising an orientation adjustment arrangement comprising at least two thrusters (20) associated with an orientation control system (51);
said thrusters (20) being controllable to adjust and/or stabilise the angular orientation of said yoke (10) in a horizontal plane;
wherein said load (10) is an element of a wind turbine;
wherein said yoke includes at least two steering arms (30) each of which extends in mutually opposite directions away from said bearing axis (16) and beyond said yoke frame (15);
and wherein each of said at least two thrusters (20) is provided on a respective steering arm (30) of said yoke (10);
wherein each said steering arm (30) has a yoke interface at a proximal end (43) thereof, and wherein a said thruster (20) is arranged on said arm (30) towards a distal end (44) thereof, wherein each said steering arm (30) has a collapsed configuration and an extended configuration in relation to said yoke (10), wherein each thruster (20) is directionally reversible, capable of providing thrust in mutually opposite directions (A, B); and in that at least one said steering arm (30) is retractable into a said collapsed configuration of said steering arm (30) by means of a telescopic arrangement along said arm wherein the length of a steering arm (30) extending beyond the yoke's frame (15) when in a deployed configuration thereof, may be reduced by one third or more; further wherein said steering arm (30), when in its deployed configuration at a lifting yoke 10 extends in a horizontal plane away from the bearing axis (17) by more than 60% of the distance from the bearing wire (17) to the yoke frame perimeter.

2. Lifting yoke (10) according to claim 1, wherein at least one said steering arm (30) is retractable into a said collapsed configuration of said steering arm (30) by means of a hinge (35) on said arm (30); and/or wherein at least one said steering arm (30) is retractable into a said collapsed configuration of steering said arm (30) by means of a releasable yoke interface (31, 32) at said proximal end (43) of said arm (30).

3. Lifting yoke according to claim 1 or according to any preceding claim, wherein a thruster hinge (25) is provided between a said thruster (20) and a said steering arm (30).

4. Lifting yoke (10) according to claim 1 or according to any previous claim, wherein said thrusters (20) are arranged equidistant from said bearing axis (17); preferably, wherein said thrusters (20) are arranged symmetrically about said bearing axis (17).

5. Lifting yoke (10) according to claim 1 or any previous claim, wherein said angular orientation of said yoke (10) about said bearing axis (17), in a horizontal plane, is controllable from a remote control unit (57), in particular by an operator.

6. Lifting yoke (10) according to claim 1 or any previous claim, said yoke (10) additionally comprising an orientation control system (51) in communication with said thrusters (20); said orientation control system (51) including an orientation sensing unit (55) and a thruster control unit (54).

7. Lifting yoke (10) according to claim 6, wherein at least one said steering arm (30) includes a plug or socket (38, 39) for electrical connection between a said thruster (20) fixed thereon and said yoke (10).

8. Method of lifting and positioning a load (1), said method including:
providing a crane (3) having a bearing wire (16);
providing a load (1);
providing a lifting yoke (10) according to any claim 1-7, configured for supporting said load (1) and suspended from said bearing wire (16); and
supporting said load (1) in said yoke (10);
and
lifting said load (1), suspended from said bearing wire (16); and
controlling said thrusters (20) to adjust and/or stabilise the angular orientation of said load (10) about said bearing axis (17);
wherein:
said load (1) is a wind turbine element; said method further including
bringing said load (1) to a required location at a wind turbine (2) while maintaining said load in a predefined orientation (*α*) in relation to said location by means of said orientation adjustment arrangement, and preferably securing said load (1) to said wind turbine (2) at said required location.

9. Method of lifting and positioning a lifting yoke (10) at a load (1) to be lifted, said method including:
providing a crane (3) having a bearing wire (16);
providing a said load (1);
providing a lifting yoke (10) according to any claim 1-7, configured for supporting said load (1) and suspended from said bearing wire (16); and
lifting said yoke (10), suspended from said bearing wire (16); and
controlling said thrusters (20) to adjust and/or stabilise the angular orientation of said yoke (10) about said bearing axis (17) and maintaining said yoke (10) in a predefined orientation (*α*) in relation to said load (1) by means of said orientation adjustment arrangement while positioning said yoke (10) at said load (1), and preferably securing said yoke (10) to said load (1);
wherein:
said load (1) is a wind turbine element, preferably at a wind turbine (2).

10. Method according to claim 8 or claim 9, said method further including extending a steering arm (30) of said yoke (10) from a collapsed to an extended configuration thereof.

11. Method according to any previous claim 8 to 10, additionally including providing an orientation control system (51) at said lifting yoke (10) in communication with said thrusters (20);
defining, in said orientation control system (51), a required angular orientation (*α*) thereof; and
detecting, by means of one or more sensors (55) in said orientation control system (51), an angular deviation in a given direction (A, B) from said required angular orientation (*α*); and automatically actuating a thruster (20) by means of said control system (51) to provide a directional force acting on said yoke (10) and opposing said detected angular deviation.

12. Method according to claim 11, further including adjusting the angular orientation of said yoke (10) using remote control of said orientation adjustment arrangement, by an operator.

13. Method according to any previous claim 8 to 10, additionally including providing an orientation control system (51) at said lifting yoke (10) in communication with said thrusters (20);
defining, in said orientation control system (51), a required inclination thereof from the horizontal; and
detecting, by means of one or more sensors (61) in said orientation control system (51), an angular inclination in a given direction from the horizontal; and
automatically actuating thrusters (20) by means of said control system (51) to provide a directional force acting on said yoke (10) and opposing said detected angular inclination.

## Patentansprüche

1. Hubgabel (10), die zum Tragen einer Last (1), während sie von einem Lagerseil (16) hängt, konfiguriert ist;
wobei die Gabel (10) einen Rahmen (15) umfasst, der sich um eine Lagerachse (17) erstreckt;
wobei die Gabel (10) zusätzlich eine Ausrichtungseinstelleinrichtung umfasst, die mindestens zwei Schubdüsen (20) umfasst, die mit einem Ausrichtungssteuersystem (51) assoziiert sind;
wobei die Schubdüsen (20) steuerbar sind, um die Winkelausrichtung der Gabel (10) in einer horizontalen Ebene einzustellen und/oder zu stabilisieren;
wobei die Last (10) ein Element einer Windkraftanlage ist;
wobei die Gabel mindestens zwei Lenkarme (30) beinhaltet, von welchen sich jeder in gegenseitig entgegengesetzter Richtung von der Lagerachse (16) weg und über den Gabelrahmen (15) hinaus erstreckt;
und wobei jede der mindestens zwei Schubdüsen (20) auf einem jeweiligen Lenkarm (30) der Gabel (10) bereitgestellt ist;
wobei jeder Lenkarm (30) eine Gabelschnittstelle an einem proximalen Ende (43) davon aufweist, und wobei eine Schubdüse (20) auf dem Arm (30) in Richtung eines distalen Endes (44) davon eingerichtet ist, wobei jeder Lenkarm (30) eine kollabierte Konfiguration und eine ausgestreckte Konfiguration in Bezug auf die Gabel (10) aufweist, wobei die Richtung jeder Schubdüse (20) umkehrbar ist, die fähig ist, einen Schub in eine gegenseitig entgegengesetzte Richtung (A, B) bereitzustellen, und dass mindestens ein Lenkarm (30) in die kollabierte Konfiguration des Lenkarms (30) mittels einer teleskopischen Einrichtung entlang des Arms einziehbar ist, wobei die Länge eines Lenkarms (30), die sich über den Rahmen (15) der Gabel in einer ausgefahrenen Konfiguration davon hinaus erstreckt, um ein Drittel oder mehr reduziert werden kann; wobei sich der Lenkarm (30) weiter, wenn er in seiner ausgefahrenen Konfiguration an einer Hubgabel (10) ist, in einer horizontalen Ebene von der Lagerachse (17) weg um mehr als 60 % des Abstands von dem Lagerseil (17) zu dem Gabelrahmenumkreis erstreckt.

2. Hubgabel (10) nach Anspruch 1, wobei mindestens ein Lenkarm (30) in die kollabierte Konfiguration des Lenkarms (30) mittels eines Scharniers (35) auf dem Arm (30) einziehbar ist; und/oder wobei mindestens ein Lenkarm (30) in die kollabierte Konfiguration des Lenkarms (30) mittels einer freigebbaren Gabelschnittstelle (31, 32) an dem proximalen Ende (43) des Arms (30) einziehbar ist.

3. Hubgabel nach Anspruch 1 oder nach einem vorstehenden Anspruch, wobei ein Schubdüsenscharnier (25) zwischen einer Schubdüse (20) und einem Lenkarm (30) bereitgestellt ist.

4. Hubgabel (10) nach Anspruch 1 oder nach einem vorstehenden Anspruch, wobei die Schubdüsen (20) in gleichem Abstand von der Lagerachse (17) eingerichtet sind; wobei die Schubdüsen (20) bevorzugt symmetrisch um die Lagerachse (17) eingerichtet sind.

5. Hubgabel (10) nach Anspruch 1 oder einem vorstehenden Anspruch, wobei die Winkelausrichtung der Gabel (10) um die Lagerachse (17) in einer horizontalen Ebene von einer Fernsteuereinheit (57), insbesondere von einem Bediener, steuerbar ist.

6. Hubgabel (10) nach Anspruch 1 oder einem vorstehenden Anspruch, wobei die Gabel (10) zusätzlich ein Ausrichtungssteuersystem (51) in Kommunikation mit den Schubdüsen (20) umfasst; wobei das Ausrichtungssteuersystem (51) eine Ausrichtungsabtasteinheit (55) und eine Schubdüsensteuereinheit (54) beinhaltet.

7. Hubgabel (10) nach Anspruch 6, wobei mindestens ein Lenkarm (30) einen Stecker oder eine Buchse (38, 39) für die elektrische Verbindung zwischen einer Schubdüse (20), die daran befestigt ist, und der Gabel (10) beinhaltet.

8. Verfahren zum Heben und Positionieren einer Last (1), wobei das Verfahren Folgendes beinhaltet: Bereitstellen eines Krans (3), der ein Lagerseil (16) aufweist;
Bereitstellen einer Last (1);
Bereitstellen einer Hubgabel (10) nach einem Anspruch 1-7, die dazu konfiguriert ist, die Last (1) zu tragen und an dem Lagerseil (16) hängt; und
Tragen der Last (1) in der Gabel (10);
und
Heben der Last (1), die von dem Lagerseil (16) hängt; und
Steuern der Schubdüsen (20), um die Winkelausrichtung der Last (10) um die Lagerachse (17) einzustellen und/oder zu stabilisieren;
wobei:
die Last (1) ein Windkraftanlagenelement ist; das Verfahren weiter das Bringen der Last (1) zu einer erforderlichen Stelle an einer Windkraftanlage (2) beinhaltet, während die Last in einer vordefinierten Ausrichtung (α) in Bezug auf die Stelle mittels der Ausrichtungseinstelleinrichtung gehalten wird, und bevorzugt Befestigen der Last (1) an der Windkraftanlage (2) an der erforderlichen Stelle.

9. Hub- und Positionierungsverfahren einer Hubgabel (10) an einer Last (1), die gehoben werden soll, wobei das Verfahren beinhaltet:
Bereitstellen eines Krans (3), der ein Lagerseil (16) aufweist;
Bereitstellen einer Last (1);
Bereitstellen einer Hubgabel (10) nach einem Anspruch 1-7, die dazu konfiguriert ist, die Last (1) zu tragen und an dem Lagerseil (16) hängt; und
Heben der Gabel (10), die von dem Lagerseil (16) hängt; und
Steuern der Schubdüsen (20), um die Winkelausrichtung der Gabel (10) um die Lagerachse (17) einzustellen und/oder zu stabilisieren, und Halten der Gabel (10) in einer vordefinierten Ausrichtung (α) in Bezug auf die Last (1) mittels der Ausrichtungseinstelleinrichtung, während die Gabel (10) an der Last (1) positioniert wird, und bevorzugt Befestigen der Gabel (10) an der Last (1);
wobei:
die Last (1) ein Windkraftanlagenelement ist, bevorzugt an einer Windkraftanlage (2)

10. Verfahren nach Anspruch 8 oder 9, wobei das Verfahren weiter das Strecken eines Lenkarms (30) der Gabel (10) aus einer kollabierten zu einer ausgestreckten Konfiguration davon beinhaltet.

11. Verfahren nach einem vorstehenden Anspruch 8 bis 10, das zusätzlich das Bereitstellen eines Ausrichtungssteuersystems (51) an der Hubgabel (10) in Kommunikation mit den Schubdüsen (20) beinhaltet;
Definieren in dem Ausrichtungssteuersystem (51) einer erforderlichen Winkelausrichtung (α) davon; und
mittels eines oder mehrerer Sensoren (55) in dem Ausrichtungssteuersystem (51), Erfassen einer Winkelabweichung in einer gegebenen Richtung (A, B) von der erforderlichen Winkelausrichtung (α); und automatisches Betätigen einer Schubdüse (20) mittels des Steuersystems (51), um eine Richtungskraft bereitzustellen, die auf die Gabel (10) einwirkt und sich der erfassten Winkelabweichung widersetzt.

12. Verfahren nach Anspruch 11, das weiter das Einstellen der Winkelausrichtung der Gabel (10) unter Verwenden von Fernsteuerung der Ausrichtungseinstelleinrichtung durch einen Bediener beinhaltet.

13. Verfahren nach einem vorstehenden Anspruch 8 bis 10, das zusätzlich das Bereitstellen eines Ausrichtungssteuersystems (51) an der Hubgabel (10) in Kommunikation mit den Schubdüsen (20) beinhaltet;
Definieren in dem Ausrichtungssteuersystem (51) einer erforderlichen Neigung davon von der Horizontalen; und
Erfassen mittels eines oder mehrerer Sensoren (61) in dem Ausrichtungssteuersystem (51) einer Winkelneigung in einer gegebenen Richtung von der Horizontalen; und
automatisches Betätigen der Schubdüsen (20) mittels des Steuersystems (51), um eine Richtungskraft bereitzustellen, die auf die Gabel (10) einwirkt und sich der erfassten Winkelneigung widersetzt.

## Revendications

1. Palonnier de levage (10) configuré pour supporter une charge (1), alors qu'il est suspendu à partir d'un câble de support (16) ;
ledit palonnier (10) comprenant un cadre (15) s'étendant autour d'un axe de support (17) ;
ledit palonnier (10) comprenant de plus un agencement d'ajustement d'orientation comprenant au moins deux propulseurs (20) associés à un système de commande d'orientation (51) ;
lesdits propulseurs (20) étant commandables pour ajuster et/ou stabiliser l'orientation angulaire dudit palonnier (10) dans un plan horizontal ;
dans lequel ladite charge (10) est un élément d'une éolienne ;
dans lequel ledit palonnier inclut au moins deux bras de direction (30) dont chacun s'étend, dans des sens mutuellement opposés, pour s'éloigner dudit axe de support (16) et au-delà dudit palonnier cadre (15) ;
et dans lequel chacun desdits au moins deux propulseurs (20) est prévu sur un bras de direction respectif (30) dudit palonnier (10) ;
dans lequel chaque dit bras de direction (30) présente une interface de palonnier à une extrémité proximale (43) de celui-ci, et dans lequel un dit propulseur (20) est agencé sur ledit bras (30) vers une extrémité distale (44) de celui-ci, dans lequel chaque dit bras de direction (30) présente une configuration escamotée et une configuration étendue par rapport audit palonnier (10), dans lequel chaque propulseur (20) est réversible en sens, capable de fournir une poussée dans des sens mutuellement opposés (A, B) ; et en ce qu'au moins un dit bras de direction (30) est rétractable dans une dite configuration escamotée dudit bras de direction (30) au moyen d'un agencement télescopique le long dudit bras, dans lequel la longueur d'un bras de direction (30) s'étendant au-delà du cadre (15) du palonnier, lorsqu'il est dans une configuration déployée de celui-ci, peut être réduite d'un tiers ou plus ; en outre dans lequel ledit bras de direction (30), lorsqu'il est dans sa configuration déployée sur un palonnier de levage 10 s'étend dans un plan horizontal pour s'éloigner de l'axe de support (17) de plus de 60 % de la distance depuis le câble de support (17) jusqu'au périmètre de cadre de palonnier.

2. Palonnier de levage (10) selon la revendication 1, dans lequel au moins un dit bras de direction (30) est rétractable dans une dite configuration escamotée dudit bras de direction (30) au moyen d'une articulation (35) sur ledit bras (30) ; et/ou dans lequel au moins un dit bras de direction (30) est rétractable dans une dite configuration escamotée de direction dudit bras (30) au moyen d'une interface de palonnier libérable (31, 32) à ladite extrémité proximale (43) dudit bras (30).

3. Palonnier de levage selon la revendication 1 ou selon une quelconque revendication précédente, dans lequel une articulation de propulseur (25) est prévue entre un dit propulseur (20) et un dit bras de direction (30).

4. Palonnier de levage (10) selon la revendication 1 ou selon une quelconque revendication précédente, dans lequel lesdits propulseurs (20) sont agencés de façon équidistante dudit axe de support (17) ; de préférence, dans lequel lesdits propulseurs (20) sont agencés symétriquement autour dudit axe de support (17).

5. Palonnier de levage (10) selon la revendication 1 ou une quelconque revendication précédente, dans lequel ladite orientation angulaire dudit palonnier (10) autour dudit axe de support (17), dans un plan horizontal, est commandable à partir d'une unité de commande à distance (57), en particulier par un opérateur.

6. Palonnier de levage (10) selon la revendication 1 ou une quelconque revendication précédente, ledit palonnier (10) comprenant de plus un système de commande d'orientation (51) en communication avec lesdits propulseurs (20) ; ledit système de commande d'orientation (51) incluant une unité de détection d'orientation (55) et une unité de commande de propulseur (54).

7. Palonnier de levage (10) selon la revendication 6, dans lequel au moins un dit bras de direction (30) inclut une fiche ou prise (38, 39) pour connexion électrique entre un dit propulseur (20) fixé sur celui-ci et ledit palonnier (10).

8. Procédé de levage et de positionnement d'une charge (1), ledit procédé incluant : la fourniture d'une grue (3) présentant un câble de support (16) ;
la fourniture d'une charge (1) ;
la fourniture d'un palonnier de levage (10) selon une quelconque revendication 1 à 7, configuré pour supporter ladite charge (1) et suspendu à partir dudit câble de support (16) ; et
le support de ladite charge (1) dans ledit palonnier (10) ;
et
le levage de ladite charge (1), suspendue à partir dudit câble de support (16) ; et
la commande desdits propulseurs (20) pour ajuster et/ou stabiliser l'orientation angulaire de ladite charge (10) autour dudit axe de support (17) ;
dans lequel :
ladite charge (1) est un élément d'éolienne ; ledit procédé incluant en outre la mise de ladite charge (1) à un emplacement requis sur une éolienne (2) tout en maintenant ladite charge dans une orientation prédéfinie (α) par rapport audit emplacement au moyen dudit agencement d'ajustement d'orientation, et de préférence la fixation de ladite charge (1) à ladite éolienne (2) audit emplacement requis.

9. Procédé de levage et de positionnement d'un palonnier de levage (10) sur une charge (1) destinée à être levée, ledit procédé incluant :
la fourniture d'une grue (3) présentant un câble de support (16) ;
la fourniture d'une dite charge (1) ;
la fourniture d'un palonnier de levage (10) selon une quelconque revendication 1 à 7, configuré pour supporter ladite charge (1) et suspendu à partir dudit câble de support (16) ; et
le levage dudit palonnier (10), suspendu à partir dudit câble de support (16) ; et
la commande desdits propulseurs (20) pour ajuster et/ou stabiliser l'orientation angulaire dudit palonnier (10) autour dudit axe de support (17) et le maintien dudit palonnier (10) dans une orientation prédéfinie (α) par rapport à ladite charge (1) au moyen dudit agencement d'ajustement d'orientation tout en positionnant ledit palonnier (10) sur ladite charge (1), et de préférence la fixation dudit palonnier (10) à ladite charge (1) ;
dans lequel :
ladite charge (1) est un élément d'éolienne, de préférence sur une éolienne (2).

10. Procédé selon la revendication 8 ou la revendication 9, ledit procédé incluant en outre l'étendue d'un bras de direction (30) dudit palonnier (10) d'une configuration escamotée à une configuration étendue de celui-ci.

11. Procédé selon une quelconque revendication précédente 8 à 10, incluant de plus la fourniture d'un système de commande d'orientation (51) sur ledit palonnier de levage (10) en communication avec lesdits propulseurs (20) ;
la définition, dans ledit système de commande d'orientation (51), d'une orientation angulaire requise (α) de celui-ci ; et
la détection, au moyen d'un ou de plusieurs capteurs (55) dans ledit système de commande d'orientation (51), d'un écart angulaire, dans un sens donné (A, B), par rapport à ladite orientation angulaire requise (α) ; et l'actionnement automatique d'un propulseur (20) au moyen dudit système de commande (51) pour fournir une force de sens, agissant sur ledit palonnier (10) et s'opposant audit écart angulaire détecté.

12. Procédé selon la revendication 11, incluant en outre l'ajustement de l'orientation angulaire dudit palonnier (10) en utilisant une commande à distance dudit agencement d'ajustement d'orientation, par un opérateur.

13. Procédé selon une quelconque revendication précédente 8 à 10, incluant de plus la fourniture d'un système de commande d'orientation (51) sur ledit palonnier de levage (10) en communication avec lesdits propulseurs (20) ;
la définition, dans ledit système de commande d'orientation (51), d'une inclinaison requise de celui-ci par rapport à l'horizontale ; et
la détection, au moyen d'un ou de plusieurs capteurs (61) dans ledit système de commande d'orientation (51), d'une inclinaison angulaire, dans un sens donné, par rapport à l'horizontale ; et
l'actionnement automatique de propulseurs (20) au moyen dudit système de commande (51) pour fournir une force de sens, agissant sur ledit palonnier (10) et s'opposant à ladite inclinaison angulaire détectée.
